# EUROPÄISCHE PATENTANMELDUNG

(11) **EP 1 035 738 A1**
(43) Veröffentlichungstag der Anmeldung: **13.09.2000**
(21) Anmeldenummer: 99104749.9
(22) Anmeldetag: 10.03.1999
(51) Int. Cl.: H04Q 3/00

(54) **Verfahren und Netzelement zum Betreiben eines Telekommunikationsnetzes**

(71) Anmelder: SIEMENS AKTIENGESELLSCHAFT, 80333 München (DE)
(72) Erfinder: Neuhaus, Matthias, 80637 München (DE); Fröschl, Maria, 81739 München (DE)

(57) **Zusammenfassung**

Erläutert wird ein Verfahren zum Betreiben eines Telekommunikationsnetzes. Ein Netzelement (16) an einem Netzknoten des Telekommunikationsnetzes wird von einem Steuerrechner (36) gesteuert. Der Steuerrechner (16) wird von einem Bedienrechner (24) aus gewartet. Beim Weiterentwickeln von Anwendungsprogrammen (102, 104) wird Allomorphie berücksichtigt, damit auch ein nicht weiterentwickelter Bedienrechner (24) den Steuerrechner (36) warten kann. Der Aufwand beim Berücksichtigen von Allomorphie im Steuerrechner (36) ist klein, weil ein Schnittstellenprogramm (100) verwendet wird, in dem wesentliche Bearbeitungsschritte für alle Anwendungsprogramme (102,104) durchgeführt werden, die das Berücksichtigen von Allomorphie gewährleisten.

## Beschreibung

Die Erfindung betrifft ein Verfahren zum Betreiben eines Telekommunikationsnetzes, kurz Tk-Netz, bei dem ein Netzelement an einem Netzknoten des Tk-Netzes von einem Steuerrechner gesteuert wird. Das Netzelement ist beispielsweise eine Vermittlungsstelle zum Vermitteln von Verbindungen, ein sogenannter Cross-Connector oder eine Konzentratoreinheit zum Anschluß mehrerer Teilnehmer an eine Verbindungsleitung. Im Steuerrechner sind neben dem Betriebssystem zum Betreiben des Steuerrechners mehrere Anwendungsprogramme gespeichert, bei deren Ausführen Anwendungsobjekte bearbeitet werden. Zu den Anwendungsobjekten gehören Daten mit einer vorgegebenen Datenstruktur sowie vorzugsweise auch vorgegebene Verfahren zum Bearbeiten der Daten. Die Datenstruktur und die Verfahren sind abhängig von einer auch beim Erzeugen des jeweiligen Anwendungsobjektes anzugebenden Klasse. Zwischen einem Bedienrechner und einem Steuerrechner wird eine Verbindung aufgebaut, über die der Steuerrechner mittels Wartungsnachrichten gewartet wird.

Derartige Verfahren werden zum Führen des Tk-Netzes eingesetzt, wenn zum Beispiel als Netzelement eine neue Vermittlungseinrichtung in Betrieb genommen wird oder wenn später Teilnehmerdaten in der Vermittlungseinrichtung geändert werden müssen, wie es beim Anschluß neuer Teilnehmer oder beim Umzug eines bisherigen Teilnehmers der Fall ist. Leistungsfähige Verfahren zum Führen des Tk-Netzes entstehen, wenn sogenannte offene Systeme verwendet werden, bei deren Programmierung weltweit geltende Standards beachtet werden. Beispielsweise betreffen Standards der ISO (International Standardisation Organization) und der ITU (International Telecommunication Union) mit ihrem Organ ITU-T, früher CCITT (International Telegraph and Telephone Consultativ Committee), den Aufbau solcher offenen Systeme. Zum Führen des Tk-Netzes soll ein separates Führungsnetz verwendet werden. Die Schnittstellen zwischen Bedienrechner und Vermittlungseinrichtung sind in Protokollen Q1, Q2 und Q3 standardisiert.

Die Anwendungsobjekte sind als Objekte einer objektorientierten Sprache definiert, z.B. in der Sprache C++ oder CHILL. Werden die Anwendungsprogramme weiterentwickelt, so muß gewährleistet werden, daß das Führungsnetz auch mit den neuen Anwendungsprogrammen fehlerfrei arbeitet. Das bedeutet insbesondere, daß Anwendungsobjekte, die vom Bedienrechner als zu einer ursprünglichen Klasse gehörend angesehen werden, nicht ohne weiteres einer geänderten Ersatzklasse zugeordnet werden können.

Dieses Problem wird im CCITT-Standard X.720 (01/92) - "Information Technology - Open Systems Interconnection - Structure of Management Information: Management Information Model" - im Abschnitt 5.2.1 angesprochen. Im Abschnitt 5.2.3 des Standards X.720 werden zwei Methoden zum Lösen des Problems vorgegeben. Bei der ersten Methode wird auf der Seite des Anwendungsprogramms eine Programmiertechnik verwendet, die Allomorphie berücksichtigt. Allomorphie ist die Fähigkeit eines bestimmten Anwendungsobjektes der Ersatzklasse so geführt zu werden, als wäre es ein Objekt der ursprünglichen Klasse, wenn diese Fähigkeit durch Maßnahmen auf der Seite des Anwendungsprogramms entsteht. Die andere Methode besteht darin, daß auf der Seite des Bedienrechners Maßnahmen getroffen werden, welche auch bei einer Weiterentwicklung des Anwendungsprogramms ein Zusammenarbeiten zwischen Bedienrechner und Anwendungsprogramm ermöglichen.

Es ist Aufgabe der Erfindung zum Betreiben eines Telekommunikationsnetzes ein einfaches Verfahren anzugeben, bei dem Allomorphie berücksichtigt wird.

Diese Aufgabe wird durch ein Verfahren mit den Merkmalen des Patentanspruchs 1 gelöst. Weiterbildungen sind in den Unteransprüchen angegeben.

Beim erfindungsgemäßen Verfahren wird aus den Wartungsnachrichten beim Abarbeiten eines für mehrere Anwendungsprogramme genutzten Schnittstellenprogramms jeweils ein Klassenkennzeichen ermittelt, in welchem die Klasse angegeben ist, auf die sich die Wartungsnachricht bezieht. Das Klassenkennzeichen in der Wartungsnachricht gibt die im Bedienrechner bekannte Klasse eines zu bearbeitenden Anwendungsobjektes an. Durch die Weiterentwicklung kommt es vor, daß die im Bedienrechner bekannte Klasse von der tatsächlichen Klasse des Anwendungsobjekts abweicht. Beim Abarbeiten des Schnittstellenprogramms wird an Hand des Klassenkennzeichens ein Ersatzkennzeichen ermittelt, welches eine Ersatzklasse angibt, der das Anwendungsobjekt im Netzelement zugeordnet ist. Das Ersatzkennzeichen wird in eine geänderte Wartungsnachricht aufgenommen. Beim Bearbeiten der geänderten Wartungsnachricht durch ein Anwendungsprogramm wird das Anwendungsobjekt dann als zur Ersatzklasse gehörend bearbeitet. Dies ist möglich, weil das Anwendungsobjekt allomorph zu der im Bedienrechner bekannten Klasse ist, die in der ungeänderten Wartungsnachricht vom Bedienrechner für das Anwendungsobjekt vorausgesetzt worden ist.

Das Schnittstellenprogramm übernimmt zentral für mehrere Anwendungsprogramme die Zuordnung der Ersatzkennzeichen zu den Klassenkennzeichen. Beim erfindungsgemäßen Verfahren muß dieser Schritt nicht in jedem Anwendungsprogramm sondern nur einmal im Schnittstellenprogramm programmiert werden. Bei mehreren hundert Anwendungsprogrammen je Steuerrechner verringert sich dadurch der Programmier-, Wartungs- und Dokumentationsaufwand erheblich. Die Anwendungsprogamme werden von zusätzlichen Schritten freigehalten, die beim Berücksichtigen von Allomorphie notwendig sind, weil diese Schritte zentral im vorgelagerten Schnittstellenprogramm durchgeführt werden. Ein Teil der zusätzlichen Schritte wird auch in nachgelagerten Datenbanken durchgeführt, welche von den Anwendungsprogrammen genutzt werden.

Das Ausführen der Zuordnung von Ersatzkennzeichen und Hilfskennzeichen in einem zentralen Schnittstellenprogramm ist möglich, weil Allomorphie beim erfindungsgemäßen Verfahren auf Klassenebene definiert ist. Eine derartige Definition ist im Standard X.720 nicht erwähnt aber dennoch standardgerecht. Allomorphie auf Klassenebene bedeutet, daß alle Objekte der Ersatzklasse so geführt werden können, als wären sie Objekte der ursprünglichen Klasse. Durch eine auf alle Objekte der Ersatzklasse bezogene Definition von Allomorphie entstehen dann keine Nachteile, wenn vorgegebene Programmierregeln beachtet werden. Beispiele für solche Programmierregeln werden unten im Zusammenhang mit den Ausführungsbeispielen erläutert.

Das erfindungsgemäße Verfahren ermöglicht es, die Vorgaben des Standards X.720 auf eine einfache Art und Weise einzuhalten. Die Anwendungsprogramme im Steuerrechner können mit einem geringen Mehraufwand weiterentwickelt werden, wobei immer sichergestellt bleibt, daß auch bei unverändert gebliebenen Programmen im Bedienrechner keine Fehler beim Betreiben des Führungsnetzes auftreten.

In einer Weiterbildung wird im Schnittstellenprogramm eine Tabelle verwendet, mit der dem Klassenkennzeichen die Ersatzkennzeichen zugeordnet werden. Die Tabelle ist im Speicher des Steuerrechners gespeichert. Ein Eintrag der Tabelle wird gelesen, indem eine dem Klassenkennzeichen zugeordnete Speicherzelle gelesen wird, die das zum Klassenkennzeichen gehörende Ersatzkennzeichen enthält. Das Ermitteln des Ersatzkennzeichens benötigt so nur einen einzigen Lesezugriff auf den Speicher. Ändern sich durch Weiterentwicklungen der Anwendungsprogramme die Ersatzkennzeichen, so müssen nur die Speicherinhalte neu programmiert werden. Das bedeutet, daß der Inhalt der Tabelle leicht ausgetauscht oder erweitert werden kann.

Wird in einer anderen Weiterbildung durch das Anwendungsprogramm nach dem Bearbeiten der geänderten Wartungsnachricht eine Bestätigungsnachricht erzeugt, in der die beim Erzeugen des zu bearbeitenden Anwendungsobjektes angegebene Klasse als Klassenzeichen angegeben ist, so kann die Bestätigungsnachricht vom Schnittstellenprogramm nachfolgend auf einfache Art weiter bearbeitet werden. Beispielsweise kann beim Abarbeiten des Schnittstellenprogramms an Hand des Klassenkennzeichens festgestellt werden, welche Daten aus der Bestätigungsnachricht zu entfernen sind. Dazu wird die im Schnittstellenprogramm verwendete Tabelle so erweitert, daß zu jedem Klassenkennzeichen auch Eintragungen zu den erlaubten Daten gehören. Das Schnittstellenprogramm erzeugt dann aus der Bestätigungsnachricht eine neue Bestätigungsnachricht, die nur solche Daten eines Anwendungsobjekts der Klasse enthält, auf die sich die Bestätigungsnachricht bezieht.

Die beim Erzeugen des zu bearbeitenden Anwendungsobjektes angegebene Klasse wird in einer Weiterbildung als Ursprungsklasse in den Daten des zu bearbeitenden Anwendungsobjekts gespeichert. Beim Abarbeiten des Anwendungsprogramms wird die Ursprungsklasse dann als Klassenkennzeichen verwendet. Durch diese Vorgehensweise ist die Ursprungsklasse auf einfache Art und Weise verfügbar.

Enthält die Bestätigungsnachricht in einer anderen Weiterbildung auch ein Hilfskennzeichen, in welchem mindestens eine Klasse bezeichnet ist, die im Bedienrechner und/oder in mindestens einem anderen Bedienrechner als die Klasse bekannt ist, zu der das zu bearbeitende Anwendungsobjekt gehört, so kann später das Programm im Bedienrechner an Hand des Hilfskennzeichens ermitteln, wie die empfangene Bestätigungsnachricht zu bearbeiten ist. Dies ist insbesondere dann von Bedeutung, wenn die im Klassenkennzeichen der vom Bedienrechner empfangenen Bestätigungsnachricht angegebene Klasse im Bedienrechner noch nicht bekannt ist. Der Bedienrechner bestimmt die Klasse, auf die sich die Bestätigungsnachricht bezieht dann an Hand der im Hilfskennzeichen angegebenen Klasse bzw. Klassen. Das Hilfskennzeichen enthält, mit anderen Worten ausgedrückt, die Klassen, zu denen das Anwendungsobjekt allomorph ist. Enthält die Bestätigungsnachricht neben dem Klassenkennzeichen auch ein Ursprungskennzeichen, in dem die Ursprungsklasse angegeben ist, so lassen sich die Vorgaben des Protokolls für den Nachrichtenaustausch im Steuerrechner und auch für das Protokoll für den Nachrichtenaustausch zwischen Bedienrechner und Steuerrechner erfüllen.

In einer anderen Weiterbildung wird mindestens eine im Bedienrechner und/oder in mindestens einem anderen Bedienrechner für das Anwendungsobjekt bekannte Klasse als Allomorphklasse in den Daten des Anwendungsobjekts gespeichert. Beim Abarbeiten des Anwendungsprogramms wird dann die Allomorphklasse als Hilfskennzeichen verwendet. Durch diese Maßnahme entsteht eine übersichtliche Datenstruktur, bei der die Anwendungsobjekte ihre Allomorphklassen selbst verwalten. Im Schnittstellenprogramm und im Anwendungsprogramm müssen keine zusätzlichen Maßnahmen hinsichtlich der Allomorphklasse getroffen werden.

In einer anderen Weiterbildung ist das Schnittstellenprogramm auch für andere Schnittstellenfunktionen zuständig. Beispielsweise für die Ereignissteuerung zum Festlegen der Bearbeitungsreihenfolge der Wartungsnachrichten oder für Protokollanpassungen dieser Nachrichten, englisch als "basic encoding" bezeichnet. Durch diese Maßnahme gibt es auf dem Steuerrechner nur ein einziges Schnittstellenprogramm, das einheitlich programmiert und gewartet wird.

Im folgenden werden Ausführungsbeispiele der Erfindung an Hand der Zeichnungen erläutert. Darin zeigen:
- Figur 1: einen Teil eines Führungsnetzes zum Führen eines Telekommunikationsnetzes,
- Figur 2: die Weiterentwicklung einer ursprünglichen Klasse A zu einer erweiterten Klasse A', deren Objekte beim Betreiben des Führungsnetzes wie Objekte der alten Klasse A geführt werden können,
- Figur 3: das Bearbeiten von Nachrichten im Steuerrechner einer Vermittlungseinheit nach der Weiterentwicklung, wobei ein Objekt geführt wird, das vor der Weiterentwicklung erzeugt worden ist,
- Figur 4: das Bearbeiten von Nachrichten im Steuerrechner nach der Weiterentwicklung, wobei ein Objekt geführt wird, das nach der Weiterentwicklung erzeugt worden ist,
- Figur 5: die Namensbindung der Klassen A und A' sowie ein Zugriff auf Objekte der beiden Klassen mittels einer Filterfunktion.

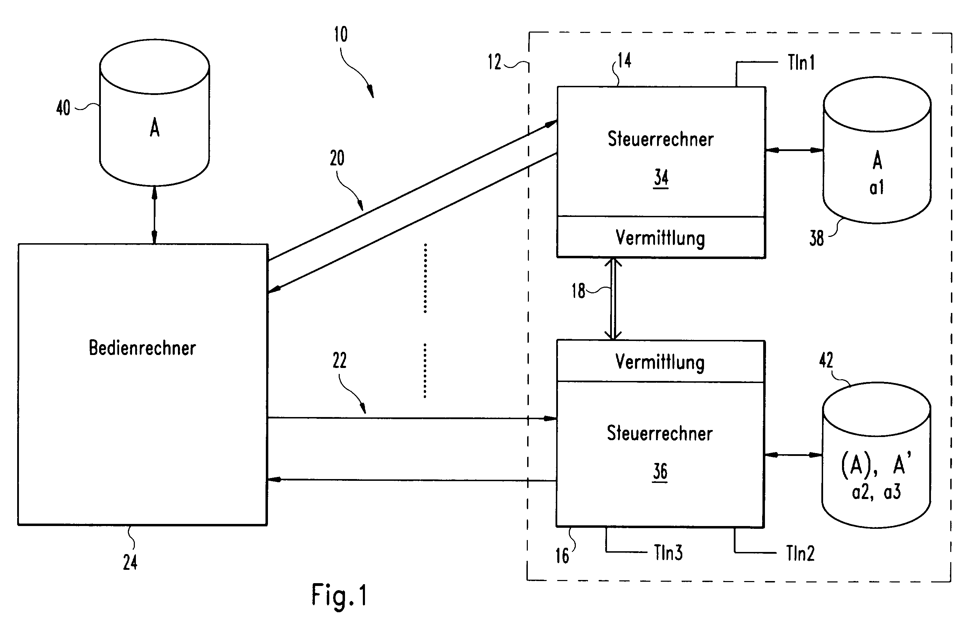

Figur 1 zeigt einen Teil eines Führungsnetzes 10 zum Führen eines Telekommunikationsnetzes 12, kurz Tk-Netz 12 genannt. Das Tk-Netz 12 enthält eine Vielzahl von Vermittlungsstellen, von denen in Figur 1 die Vermittlungsstellen 14 und 16 dargestellt sind. Zum Tk-Netz 12 gehören weiterhin Verbindungsleitungen zwischen den Vermittlungsstellen, von denen in Figur 1 eine Verbindungsleitung 18 zwischen der Vermittlungsstelle 14 und der Vermittlungsstelle 16 dargestellt ist. Das Tk-Netz 12 verbindet die Teilnehmer des Tk-Netzes 12, beispielsweise einen an die Vermittlungsstelle 14 angeschlossenen Teilnehmer Tln1 und einen an die Vermittlungsstelle 16 angeschlossenen Teilnehmer Tln2.

Das Führungsnetz 10 enthält eigene Übertragungsstrecken 20 und 22, die zu einem Bedienrechner 24 führen. Die Übertragungsstrecke 20 überträgt Wartungsnachrichten vom Bedienrechner 24 zur Vermittlungsstelle 14, um beispielsweise in der Vermittlungsstelle 14 Teilnehmerdaten des Teilnehmers Tln1 zu ändern. Die Vermittlungsstelle 14 sendet ihrerseits Bestätigungsnachrichten an den Bedienrechner 24, um die ordnungsgemäße Bearbeitung der empfangenen Wartungsnachricht zu signalisieren. Die Übertragungsstrecke 22 dient zur bidirektionalen Datenübertragung zwischen Bedienrechner 24 und Vermittlungsstelle 16.

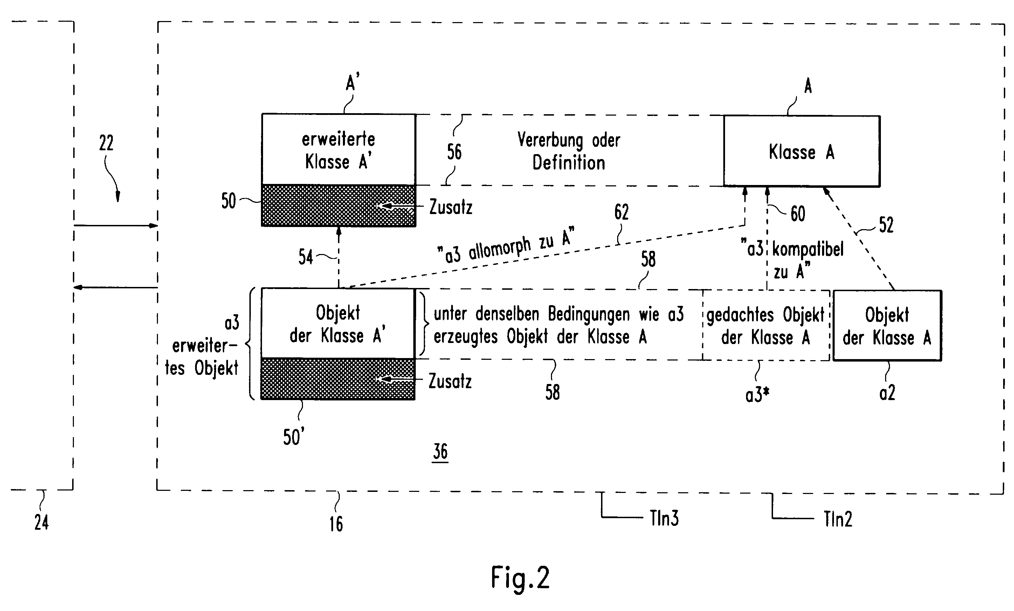

Die Wartungsnachrichten werden in der Vermittlungsstelle 14 von einem Steuerrechner 34 und in der Vermittlungsstelle 16 von einem Steuerrechner 36 bearbeitet. Die Datenstrukturen, auf die sich die Wartungsnachrichten beziehen, gehören im Bedienrechner 24 und in der Vermittlungsstelle 14 derselben Klasse A an. Die Vermittlungsstelle 16 enthält dagegen Datenstrukturen einer Klasse A', die gegenüber der im Bedienrechner 24 vorausgesetzten Klasse A weiterentwickelt worden ist. Der fehlerfreie Betrieb des Führungsnetzes 10 wird bezüglich der Vermittlungsstelle 16 dadurch gewährleistet, daß beim Weiterentwickeln der Klasse A zur Klasse A' Allomorphie berücksichtigt worden ist. Was Allomorphie in diesem Zusammenhang bedeutet, wird unten an Hand der Figur 2 erläutert.

Beim in Figur 1 dargestellten Ausführungsbeispiel wird in der Vermittlungsstelle 14 die Klasse A verwendet, die beispielsweise die Datenstruktur für Teilnehmerdaten festlegt, z.B. die Rufnummer und die nutzbaren Dienste des Tk-Netzes 12. Teilnehmerdaten des Teilnehmers Tln1 sind in einem Objekt a1 gemäß der durch die Klasse A vorgegebenen Datenstruktur in einem Speicher 38 des Steuerrechners 34 gespeichert. Die Klasse A ist auch im Bedienrechner 24 bekannt, angedeutet durch den Buchstaben A in einem Speicher 40 des Bedienrechners 24.

In der Vermittlungsstelle 16 wurde die Klasse A zur Klasse A' weiterentwickelt. Ein Objekt a2 enthält beispielsweise die Teilnehmerdaten des Teilnehmers Tln2. Das Objekt a2 wurde erstmalig im Speicher 42 gespeichert, bevor die Klasse A zur Klasse A' weiterentwickelt worden ist. Bei der Weiterentwicklung wurde das ursprüngliche Objekt a2 aber umgewandelt, und zwar in ein erweitertes Objekt a2 der Klasse A', indem ein Datenfeld ergänzt worden ist. Ein Objekt a3 im Speicher 42 gehört zur Klasse A' und enthält die Teilnehmerdaten eines Teilnehmers Tln3, dessen Anschluß erst nach der Weiterentwicklung in der Vermittlungsstelle 16 eingerichtet worden ist. Obwohl die Programme im Bedienrechner 24 nur Objekte der Klasse A unterstützen, können die zur Klasse A' gehörenden Objekte a2 und a3 vom Bedienrechner 24 aus wie Objekte der Klasse A abgefragt, geändert oder neu eingerichtet werden. Die Erweiterungen der Klasse A' im Vergleich zur Klasse A können vom Bedienrechner 24 allerdings erst dann bearbeitet werden, wenn die Programme im Bedienrechner 24 zu einem späteren Zeitpunkt so geändert werden, daß auch die Klasse A' im Bedienrechner 24 bekannt ist.

Figur 2 zeigt die Klassen A und A' sowie das ursprüngliche Objekt a2 und das Objekt a3. An Hand der Figur 2 wird im folgenden erläutert, was die Bezeichnung "allomorph zu" bedeutet. Die Klasse A' unterscheidet sich von der Klasse A nur durch ein zusätzliches Datenfeld 50. Die Datenstruktur der Klasse A wurde also um das Datenfeld 50 erweitert, um eine weitere Eigenschaft der Teilnehmer Tln2, Tln3 beim Betrieb der Vermittlungsstelle 16 berücksichtigen zu können, z.B. ob der Teilnehmer Tln2, Tln3 über einen Lichtwellenleiter oder über einen Kupferleiter an die Vermittlungsstelle 16 angeschlossen ist. Die Klasse A' wird deshalb im folgenden auch als erweiterte Klasse A' bezeichnet. Ein Datenfeld 50' im Objekt a3 enthält als Datum einen Wert, der angibt, daß der Teilnehmer Tln3 mittels eines Lichtwellenleiters an die Vermittlungsstelle 16 angeschlossen ist. Das Objekt a3 wird allgemein als erweitertes Objekt a3 bezeichnet.

Die Klasse, die beim Erzeugen eines Objektes angegeben wird, wird als ursprüngliche Klasse dieses Objekts bezeichnet. Das Objekt a2 hatte als ursprüngliche Klasse die Klasse A, angedeutet durch einen Pfeil 52. Das erweiterte Objekt a3 hat dagegen als ursprüngliche Klasse die erweiterte Klasse A', angedeutet durch einen Pfeil 54.

Eine erste Möglichkeit zum Festlegen der Datenstruktur der Klasse A besteht darin, die Klasse A' aus der Klasse A mittels sogenannter Vererbung zu erzeugen, die in objektorientierten Programmiersprachen definiert ist. Solche Programmiersprachen sind z.B. die Sprachen C++ und CHILL. Bei einer Vererbung wird durch den Programmierer angegeben, daß die erweiterte Klasse A' von der Klasse A sämtliche Datenstrukturen und sogenannten Methoden zum Bearbeiten der Datenstrukturen übernehmen soll. Weiterhin wird angegeben, daß die Klasse A' zusätzlich das Datenfeld 50 enthält. Eine andere Möglichkeit zum Festlegen der Klasse A' besteht darin, diese Klasse neu zu definieren. In diesem Fall wird die Klasse A' so definiert, wie es bereits bei der Klasse A der Fall war. Zusätzlich wird jedoch noch das Datenfeld 50 definiert. Die Beziehung der übereinstimmenden Teile der Klasse A und der erweiterten Klasse A' ist in Figur 2 mittels Strichlinien 56 dargestellt.

In einem gedachten Objekt a3* sind aus dem Objekt a3 alle Datenfelder und alle Methoden zum Bearbeiten der Datenfelder enthalten, die auch beim Einrichten des Teilnehmers Tln3 vor der Weiterentwicklung erzeugt worden wären, als es zwar die Klasse A, aber noch nicht die Klasse A' gab. Im Objekt a3* fehlt deshalb ein dem Datenfeld 50 bzw. 50' entsprechendes Datenfeld. Dieser Sachverhalt wird durch Strichlinien 58 verdeutlicht. Das Objekt a3* ist eine Anschauungshilfe zum Abgrenzen der Begriffe "kompatibel zu" und "allomorph zu". Ein Pfeil 60 verdeutlicht, daß das Objekt a3* kompatibel zur Klasse A ist, weil es genau die Datenstrukturen hat, die in der Klasse A vorgegeben sind. Das erweiterte Objekt a3 ist dagegen allomorph zur Klasse A, vgl. Pfeil 62. Das Objekt a3 hat die allomorphe Klasse A.

Allomorphie ist die Fähigkeit der Objekte der Klasse A' so geführt zu werden, als wären sie Objekte ihrer allomorphen Klasse A, wenn diese Fähigkeit durch Maßnahmen auf der Seite des Anwendungsprogramms entsteht. Bei einer stufenweisen Erweiterung kann es mehr als eine allomorphe Klasse geben, z.B. die allomorphe Klasse der letzten Erweiterung und die allomorphe Klasse der vorletzten Erweiterung.

Ein erweitertes Objekt hat nur dann eine allomorphe Klasse, wenn das erweiterte Objekt ohne die Erweiterungen zur allomorphen Klasse kompatibel gemäß Standard X.720 Abschnitt 5.2.2 ist. Insbesondere hat das erweiterte Objekt demnach alle Attribute, Attributgruppen, Führungsfunktionen und Bestätigungsverfahren, die auch in der allomorphen Klasse festgelegt sind. Durch das Berücksichtigen der Allomorphie beim Erweitern der Klasse A wird erreicht, daß das Führungsnetz 10 auch nach der Erweiterung fehlerfrei arbeitet.

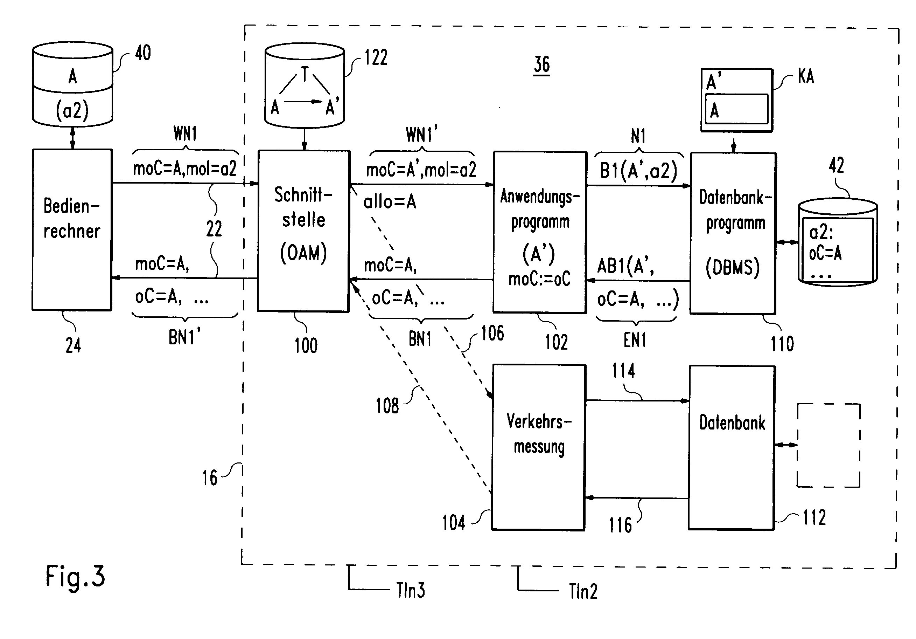

Figur 3 zeigt das Bearbeiten von Nachrichten im Steuerrechner 16 nach der Weiterentwicklung der Klasse A zur Klasse A', wobei das Objekt a2 geführt wird, das vor der Weiterentwicklung als zur Klasse A gehörend angelegt worden ist. Beim Weiterentwickeln der Klasse A zur Klasse A' wurde Allomorphie berücksichtigt, so daß Objekte der Klasse A' zur Klasse A allomorph sind. Außerdem wurden beim Weiterentwickeln alle Objekte der Klasse A in Objekte der Klasse A' umgewandelt, indem Datenfelder und Methoden ergänzt worden sind.

Der Steuerrechner 16 enthält ein Schnittstellenprogramm 100, das vom Bedienrechner 24 kommende Wartungsnachrichten, beispielsweise eine Wartungsnachricht WN1, bearbeitet und das Bestätigungsnachrichten, beispielsweise eine Bestätigungsnachricht BN1', an den Bedienrechner 24 sendet. Das Schnittstellenprogramm 100 ist die Schnittstelle zwischen dem Bedienrechner 24 und mehreren Anwendungsprogrammen im Steuerrechner 16, von denen in Figur 3 zwei Anwendungsprogramme 102 und 104 gezeigt sind. Das Anwendungsprogramm 102 dient zum Verwalten der zu den an die Vermittlungsstelle 16 angeschlossenen Teilnehmern Tln2, Tln3 gehörenden Daten. Das Anwendungsprogramm 104 wird zur Verkehrsmessung verwendet.

Die vom Bedienrechner kommende Wartungsnachricht WN1 wird beim Abarbeiten des Schnittstellenprogramms 100 an das Anwendungsprogramm 102 als geänderte Wartungsnachricht WN1' weitergeleitet. Für das Anwendungsprogramm 104 bestimmte Wartungsnachrichten werden dagegen beim Abarbeiten des Schnittstellenprogramms 100 an das Anwendungsprogramm 104 weitergeleitet, vgl. Pfeil 106.

Nach dem Bearbeiten der Wartungsnachricht WN1' im Anwendungsprogramm 102 erzeugt das Anwendungsprogramm 102 eine Bestätigungsnachricht BN1 für die Schnittstelle 100. Hat das Anwendungsprogramm 104 eine Wartungsnachricht bearbeitet, so sendet es ebenfalls eine Bestätigungsnachricht an das Schnittstellenprogramm 100, vgl. Pfeil 108.

Beim Bearbeiten der Wartungsnachricht WN1' arbeitet das Anwendungsprogramm 102 mit einem ebenfalls im Steuerrechner 36 vorhandenen Datenbankprogramm 110 zusammen, mit dem Teilnehmerdaten im Speicher 42 gespeichert, verändert, gelöscht oder gelesen werden. Das Anwendungsprogramm 102 sendet Anforderungen in Form von Nachrichten an das Datenkbankprogramm 110, beispielsweise die Nachricht N1. Nach dem Ausführen der Anforderung in der Nachricht N1 sendet das Datenbankprogramm 110 eine Ergebnisnachricht EN1 an das Anwendungsprogramm 102 zurück. Das Anwendungsprogramm 104 arbeitet mit einem eigenen Datenbankprogramm 112 zusammen, indem es Anforderungen an das Datenbankprogramm 112 sendet, vgl. Pfeil 114, und indem es vom Datenbankprogramm 112 Ergebnisnachrichten empfängt und weiterbearbeitet, vgl. Pfeil 116.

Das Datenbankprogramm 110 benutzt für die Objekte der ursprünglichen Klasse A und die Objekte der weiterentwickelten Klasse A' dasselbe Zugriffsverfahren. Dies ist möglich, weil Kombinationsklassen verwendet werden, in denen die Datenstrukturen und Methoden der ursprünglichen Klasse und der erweiterten Klasse zusammengeführt sind. Eine Kombinationsklasse KA ist die Kombination der Klasse A und der Klasse A'. Sämtliche Objekte im Speicher 42, welche die allomorphe Klasse A als ursprüngliche Klasse haben, werden mit der Weiterentwicklung um die zusätzlichen Datenfelder der erweiterten Klasse A erweitert. Die zusätzlichen Datenfelder werden mit vorgegebenen Werten belegt.

Die Wartungsnachricht WN1 enthält ein Klassenkennzeichen moC, das die Klasse A als die Klasse angibt, auf welche sich die Wartungsnachricht WN1 bezieht. Ein Objektkennzeichen moI gibt das Objekt a2 an, auf das sich die Wartungsnachricht WN1 bezieht. Die Wartungsnachricht WN1 wird vom Bedienrechner 24 gesendet, um die Teilnehmerdaten des Teilnehmers Tln2 zu erfahren. Im Bedienrechner 24 ist lediglich bekannt, daß diese Teilnehmerdaten in dem Objekt a2 enthalten sind, das im Steuerrechner 36 gespeichert ist. Die Wartungsnachricht WN1 enthält weitere nicht dargestellte Datenfelder. In einem dieser Datenfelder ist beispielsweise die auszuführende Leseoperation festgelegt.

Beim Bearbeiten der Wartungsnachricht WN1 im Schnittstellenprogramm 100 wird die im Klassenkennzeichen moC angegebene Klasse A ermittelt. An Hand der so ermittelten Klasse A wird beim Abarbeiten des Schnittstellenprogramms 100 mittels einer Tabelle T die Klasse A' als Ersatzklasse ermittelt und in das Klassenkennzeichen moC der Wartungsnachricht WN1 eingetragen. Die Tabelle T ist in einem Speicher 122 des Steuerrechners 36 gespeichert.

Die Wartungsnachricht WN1' betrifft mit dem Klassenkennzeichen moC=A' die erweiterte Klasse A'. Der Wert des Objektkennzeichens moI=a2 bleibt in der Wartungsnachricht WN1' unverändert. Ein Kennzeichen allo in der Wartungsnachricht WN1' gibt alle Klassen an, die zur Klasse A' allomorph sind, d.h. im Ausführungsbeispiel die Klasse A. Das Schnittstellenprogramm 100 entnimmt diese Klassen ebenfalls der Tabelle T. Die anderen Daten der Wartungsnachricht WN1 werden in die Wartungsnachricht WN1' übernommen. Beim Erzeugen der zur Wartungsnachricht WN1 gehörenden Wartungsnachricht WN1' führt das Schnittstellenprogramm 100 auch eine Protokollanpassung von einem Übertragungsprotokoll auf der Übertragungsstrecke 22 in ein Nachrichtenprotokoll durch, das innerhalb des Steuerrechners 36 verwendet wird.

Die beim Bearbeiten der Wartungsnachricht WN1' durch das Anwendungsprogramm 102 erzeugte Nachricht N1 enthält einen Befehl B1, der angibt, daß Daten gelesen werden sollen. Als Parameter des Befehls B1 enthält die Nachricht N1 die Klasse A', zu der die zu lesenden Daten gehören, sowie das Objekt a2, dessen Daten gelesen werden sollen. Das Anwendungsprogramm 102 bearbeitet ausschließlich Nachrichten, die sich auf Objekte der Klasse A' beziehen. Bezüglich der Klasse A sind im Anwendungsprogramm 102 keine weiteren Maßnahmen getroffen.

Das Datenbankprogramm 110 greift beim Bearbeiten der Nachricht N1 auf den Speicher 42 zu, um die Daten des Teilnehmers Tln2 zu lesen, die im Objekt a2 gespeichert sind. Das Objekt a2 enthält außerdem ein Ursprungskennzeichen oC, in dem die Klasse A angegeben ist, die beim Erzeugen des Objekts a2 angegeben worden ist. Das Datenbankprogramm 110 liest die mit dem Befehl B1 angeforderten Daten im Objekt a2 und trägt diese Daten in die Ergebnisnachricht EN1 ein. In der Ergebnisnachricht EN1 ist außerdem mittels eines Antwortkennzeichens AB1 vermerkt, daß die Ergebnisnachricht EN1 das Ergebnis enthält, das beim Bearbeiten des Befehls B1 erzeugt worden ist. Weiterhin ist in der Ergebnisnachricht EN1 die Klasse A' als die Klasse angegeben, welche von der Ergebnisnachricht EN1 betroffen ist. Das Ursprungskennzeichen oC=A wird ebenfalls vom Datenbankprogramm 110 in der Ergebnisnachricht EN1 an das Anwendungsprogramm 102 übermittelt.

Beim Abarbeiten des Anwendungsprogramms 102 wird vorausgesetzt, daß sich alle zu bearbeiteten Nachrichten auf die Klasse A' und nicht auf die Klasse A beziehen. Durch das Anwendungsprogramm 102 wird der Wert des Ursprungskennzeichens oC=A als Wert des Klassenkennzeichens moC in der Bestätigungsnachricht BN1 übernommen. Für diese Wertzuweisung ist es nicht erforderlich, daß das Anwendungsprogramm 102 Objekte der Klasse A bearbeiten kann. Außerdem enthält die Bestätigungsnachricht BN1 das Ursprungskennzeichen oC=A und die abgefragten Teilnehmerdaten des Teilnehmers Tln2. Das Schnittstellenprogramm 100 braucht sich aufgrund dieser Vorgehensweise das Klassenkennzeichen der Wartungsnachricht WN1 nicht zu merken.

Die Bestätigungsnachricht BN1 wird vom Schnittstellenprogramm 100 bearbeitet und als Bestätigungsnachricht BN1' gemäß dem Übertragungsprotokoll auf der Übertragungsstrecke 22 an den Bedienrechner 24 gesendet. An Hand der Tabelle T ermittelt das Schnittstellenprogramm 100, welche Datenfelder in der Nachricht BN1 nicht in Objekten der Klasse A enthalten sind. Diese Datenfelder werden nicht in die Bestätigungsnachricht BN1' übernommen.

Der Bedienrechner 24 empfängt die Bestätigungsnachricht BN1' und kann sie wie eine Nachricht bearbeiten, die sich auf ein Objekt der Klasse A bezieht. Objekte der Klasse A' im Steuerrechner 36 werden vom Bedienrechner 24 aus so geführt, als wären sie Objekte der Klasse A. Die Weiterentwicklung im Steuerrechner 36 schränkt die Betriebsmerkmale des Bedienrechners 24 somit nicht ein.

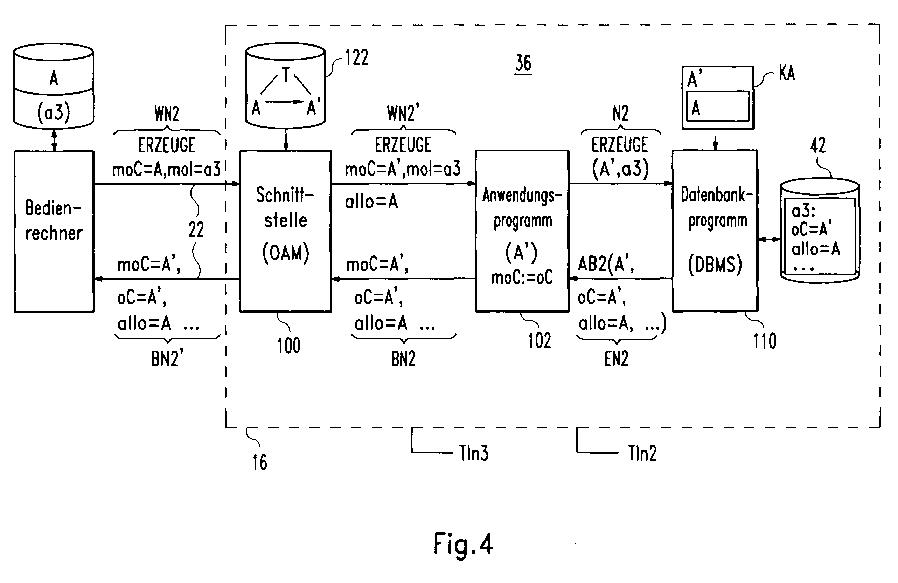

Figur 4 zeigt das Bearbeiten von Nachrichten im Steuerrechner 16 nach der Weiterentwicklung der Klasse A zur Klasse A', wobei das Objekt a3 geführt wird, das erst nach der Weiterentwicklung erzeugt wird. Durch die Eingaben einer Bedienperson in den Bedienrechner 24 wird im Bedienrechner 24 eine Wartungsnachricht WN2 erzeugt, welche die Aufgabe hat, im Steuerrechner 16 das Objekt a3 für die Teilnehmerdaten des Teilnehmers Tln3 zu erzeugen. Die Wartungsnachricht WN2 enthält deshalb in einem Befehlsfeld eine Codierung für den Befehl "Erzeuge". Das Klassenkennzeichen moC in der Wartungsnachricht WN2 kennzeichnet die Klasse A als die Klasse, auf die sich die Wartungsnachricht WN2 bezieht. Das Objektkennzeichen moI der Wartungsnachricht WN2 kennzeichnet das Objekt a3, das durch die Wartungsnachricht WN2 erzeugt werden soll. Die Wartungsnachricht WN2 enthält außerdem noch weitere nicht dargestellte Daten.

Das Schnittstellenprogramm 100 bearbeitet die Wartungsnachricht WN2 ebenso wie oben für die Wartungsnachricht WN1 erläutert. Beim Bearbeiten der Wartungsnachricht WN2 wird wiederum die im Speicher 122 gespeicherte Tabelle T verwendet, um für die im Klassenkennzeichen moC der Wartungsnachricht WN2 angegebene Klasse A die Ersatzklasse A' zu ermitteln und als Klassenkennzeichen moC der Wartungsnachricht WN2' zu verwenden. Das Objektkennzeichen moI=a3 hat in der Wartungsnachricht WN2' den gleichen Wert, wie in der Wartungsnachricht WN2. Auch die verbleibenden Daten werden aus der Wartungsnachricht WN2 beim Ausführen des Schnittstellenprogramms 100 in die Wartungsnachricht WN2' übernommen. Zusätzlich wird im Kennzeichen allo der Wartungsnachricht WN2' vermerkt, daß die Klasse A die Klasse ist, zu der die Klasse A' allomorph ist. Die so erzeugte Wartungsnachricht WN2' wird vom Schnittstellenprogramm 100 gemäß dem Protokoll im Steuerrechner 36 an das Anwendungsprogramm 102 gesendet.

Das Anwendungsprogramm 102 sendet beim Bearbeiten der Wartungsnachricht WN2' eine Nachricht N2 an das Datenbankprogramm 110, um das Objekt a3 im Speicher 42 anlegen zu lassen. Die Nachricht N2 enthält verschlüsselt den Befehl "Erzeuge", die erweiterte Klasse A' sowie den Namen des anzulegenden Objekts a3.

Beim Bearbeiten der Nachricht N2 mittels des Datenbankprogramms 110 wird im Speicher 42 das Objekt a3 erzeugt, indem diesem Objekt bestimmte Speicherzellen zugewiesen werden, die mit Anfangswerten belegt werden. Im Ursprungskennzeichen oC des Objekts a3 wird die Klasse A' vermerkt, weil diese Klasse beim Erzeugen des Objektes a3' angegeben wurde. Ein Kennzeichen allo im Objekt a3 weist auf die Klasse A hin, weil das Objekt a3 zu der Klasse A allomorph ist.

Das Datenbankprogramm 110 erzeugt eine Ergebnisnachricht EN2, um das Erzeugen des Objekts a3 zu bestätigen. Die Ergebnisnachricht EN2 enthält ein Antwortkennzeichen AB2, das angibt, daß die Ergebnisnachricht EN2 beim Bearbeiten eines Befehls "Erzeuge" entstanden ist. Weiterhin enthält die Ergebnisnachricht EN2 ein Kennzeichen, das auf die Klasse A' hinweist, das Ursprungskennzeichen oC=A', das Kennzeichen allo=A sowie weitere nicht dargestellte Daten des Objekts a3.

Die Ergebnisnachricht EN2 wird vom Anwendungsprogramm 102 bearbeitet, wobei eine Bestätigungsnachricht BN2 erzeugt wird. In der Bestätigungsnachricht BN2 wird als Wert des Klassenzeichens moC der Wert des Ursprungskennzeichens oC=A' verwendet. Die anderen Daten der Ergebnisnachricht EN2 werden in die Bestätigungsnachricht BN2 übernommen.

Beim Abarbeiten des Schnittstellenprogramms 100 wird nach dem Empfang der Bestätigungsnachricht BN2 eine Bestätigungsnachricht BN2' gemäß dem auf der Übertragungsstrecke 22 verwendeten Übertragungsprotokoll erzeugt. Die Bestätigungsnachricht BN2' enthält alle Daten der Bestätigungsnachricht BN2, weil das Schnittstellenprogramm 100 an Hand der Tabelle T feststellt, daß keine Datenfelder entfernt werden müssen, wenn die Bestätigungsnachricht BN2 als Klassenkennzeichen die Klasse A' hat.

Beim Bearbeiten der Bestätigungsnachricht BN2' im Bedienrechner 24 wird an Hand des Kennzeichens allo festgestellt, daß die Bestätigungsnachricht BN2' Daten eines Objekts der Klasse A betrifft bzw. daß die Bestätigungsnachricht BN2' so behandelt werden kann, als würde sie Daten eines Objektes der Klasse A enthalten. Obwohl das Programm im Bedienrechner 24 nach der Weiterentwicklung im Steuerrechner 36 nicht verändert worden ist, können Objekte der Klasse A' im Steuerrechner 36 vom Steuerrechner 24 aus so geführt werden, als wären sie Objekte der Klasse A. Solange im Bedienrechner A nur die Klasse A bekannt ist, werden in der Bestätigungsnachricht BN2' auch nur die in Objekten der Klasse A enthaltenen Daten bearbeitet.

Aufgrund des an Hand der Figuren 3 und 4 erläuterten Verfahrens ist es auch möglich, Klassen zu unterstützen, die zu mehreren Klassen allomorph sind. Wird z.B. die Klasse A' zu einer Klasse A'' weiterentwickelt, so können Objekte zu den Klassen A' und A allomorph sein. Der Steuerrechner 36 kann dann von Bedienrechnern 24 ausgeführt werden, bei deren Programmierung mindestens eine der Klassen A, A' oder A'' bekannt war. Auf eine Unterstützung der Klasse A kann verzichtet werden, sobald alle Bedienrechner zumindest die Klasse A' kennen.

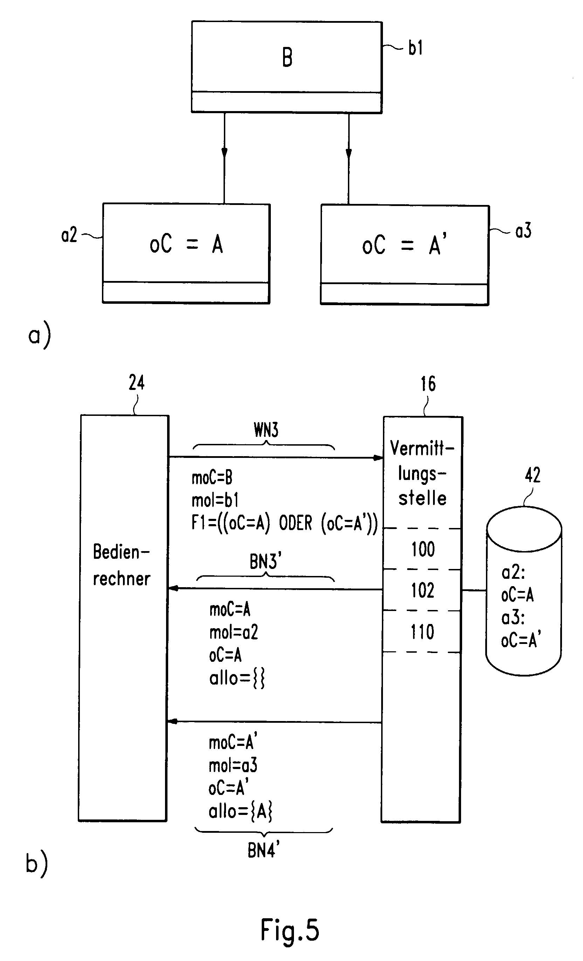

Das an Hand der Figuren 3 und 4 erläuterte Verfahren wird bei Wartungsnachrichten zum Erzeugen und bei Wartungsnachrichten zum Lesen von Objekten angewendet. Außerdem können mit diesem Verfahren Daten in Objekten verändert sowie Objekte gelöscht werden. Damit diese Verfahren fehlerfrei arbeiten, muß der Bedienrechner 24 fähig sein:
- Die Bestätigungsnachrichten BN den zugehörigen Wartungsnachrichten WN zuzuordnen,
- das Kennzeichen allo in den Bestätigungsnachrichten BN zu lesen und auszuwerten,
- unbekannte Namensbindungen (vgl. Erläuterungen zu Fig. 5) zu übergehen und unbekannte Kennzeichenwerte und Parameter zu übergehen,
- falls im Bedienrechner eine Datenbank vorhanden ist die Ursprungsklasse eines Objekts zu speichern,
- unbekannte wahlfreie Werte zu übergehen, und
- unbekannte Werte vom Datentyp "enumerated" zu übergehen.

Mit anderen Worten muß der Bedienrechner 24 so programmiert sein, daß von ihm aus Objekte in einen Steuerrechner mit größerem Wissen geführt werden können.

Das Schnittstellenprogramm 100 hat folgende Merkmale:
- Beim Erweitern einer Klasse ist es erforderlich, die erweiterte Klasse in die Tabelle T aufzunehmen, das bedeutet, daß für jede erweiterte Klasse die Klassen gespeichert werden müssen, zu denen die erweiterte Klasse allomorph ist.
- Die Namensbindungen, welche von der erweiterten Klasse betroffen werden, müssen in der Tabelle T gespeichert werden.
- Das Schnittstellenprogramm 100 soll aus den vom Anwendungsprogramm 102 kommenden Bestätigungsnachrichten BN die Daten entfernen, die nicht zur kompatiblen Klasse gehören, falls die an den Bedienrechner 24 gesendete Bestätigungsnachricht BN die nicht erweiterte Klasse betrifft.
- Das Schnittstellenprogramm 100 muß Filterbefehle bearbeiten können. Dies wird unten an Hand der Figur 5 noch genauer erläutert.

Das Anwendungsprogramm 102 erfüllt die folgenden Anforderungen:
- Sobald zur erweiterten Klasse übergegangen wird, werden unabhängig vom Wissen des Bedienrechners nur noch Objekte der neuen Klasse erzeugt.
- Die neuen Klassen sind entweder erweiterte Klassen oder Klassen, die mit den bisherigen Klassen nichts zu tun haben.

Das Datenbankprogramm 110 ist so ausgelegt, daß nach einer Weiterentwicklung der gesamte Datenbestand zur Ursprungsklasse in einen Datenbestand der erweiterten Klasse umgewandelt wird.

Das Erstellen der Tabelle T und das Umwandeln des Datenbestandes in der Datenbank des Datenbankprogramms 110 werden durch Hilfsprogramme unterstützt. Diese Hilfsprogramme werten Beschreibungssprachen aus, mit deren Hilfe die Erweiterung von Klassen angegeben wird.

Im folgenden werden Bedingungen angesprochen, die bei der Berücksichtigung von Allomorphie eingehalten werden müssen. Diese Bedingungen gelten auf der Ebene der Klassen, obwohl gemäß Standard X.720 Allomorphie zunächst eine Eigenschaft eines Objekts ist. Im Standard X.720 sind folgende Bedingungen angesprochen:
- Bedingungen für die erweiterte Klasse in Abschnitt 5.2.2.1,
- Bedingungen für sogenannte Programmpakete in den Abschnitten 5.2.2.1 und 5.2.2.2,
- Bedingungen für Kennzeichenwerte in den Abschnitten 5.2.2.3 und 5.3.4.1,
- Bedingungen für sogenannte Kennzeichengruppen in Abschnitt 5.2.2.4,
- Bedingungen für Aktionen, Bestätigungen und Parameter in Abschnitt 5.2.2.54,
- Bedingungen für das Verhalten der Objekte in Abschnitt 5.2.2.6, und
- Bedingungen für die Namensbindung in Abschnitt 5.3.4.1.

Figur 5 zeigt in einem Teil a einen Ausschnitt aus einem sogenannten binären Baum, der die Namensbindung von Objekten der Klasse A und A' festlegt. Namensbindung ist die für das Festlegen eines eindeutigen Namens für ein Objekt verwendete Zuordnung des Objektes zu einem sogenannten übergeordneten Objekt. Gleiche Objektnamen für unterschiedliche Objekte können verwendet werden, wenn die Objekte jeweils zu einem anderen übergeordneten Objekt gehören. Aus dem Namen des übergeordneten Objekts und dem Namen der so untergeordneten Objekte entsteht dann ein im Steuerrechner 16 eindeutiger Name. Das übergeordnete Objekt ist beim Erzeugen eines Objektes anzugeben. Das untergeordnete Objekt wird als im übergeordneten Objekt enthalten angesehen, englisch als "Containment" bezeichnet.

Ein Objekt b1 der Klasse B ist das übergeordnete Objekt für die Objekte a2 und a3, die beide nach der Weiterentwicklung zur Klasse A' gehören, jedoch unterschiedliche ursprüngliche Klassen oC=A bzw. oC=A' haben. In der Tabelle T, die vom Schnittstellenprogramm 100 verwendet wird, sind die Namensbindungen vermerkt. Für den im Teil A der Figur 5 gezeigten Ausschnitt des Namensbaumes ist in der Tabelle T vermerkt, daß Objekte der Klasse B untergeordnete Objekte der ursprünglichen Klasse A bzw. der Klasse A' enthalten. Bei jeder Weiterentwicklung werden auch die Namensbindungen in der Tabelle T an den Namensbaum angepaßt, der nach der Weiterentwicklung maßgeblich ist.

Im Teil b der Figur 5 ist ein Zugriff auf Objekte beider Klassen A und A' dargestellt, nachdem auch der Bedienrechner 24 beide Klassen A und A' kennt. Eine Wartungsnachricht WN3 enthält eine Filteranweisung F1=((oC=A)ODER(oC=A')), in der festgelegt ist, daß untergeordnete Objekte der Klasse A oder A' erfaßt werden sollen. Das Klassenkennzeichen moC=B der Wartungsnachricht WN3 gibt an, daß sich die Wartungsnachricht WN3 auf die Klasse B bezieht. Das Objektkennzeichen moI=b1 der Wartungsnachricht WN3 gibt an, daß das Objekt b1 bearbeitet werden soll, d.h. das übergeordnete Objekt ist.

Beim Ausführen des Schnittstellenprogramms 100 in der Vermittlungsstelle 16 wird die Filteranweisung F1 unverändert an das Anwendungsprogramm 102 gesendet. Das bedeutet insbesondere, daß in der Filteranleitung F1 Operationen, die sich auf die ursprüngliche Klasse A beziehen, nicht durch Operationen ersetzt werden, die sich auf die erweiterte Klasse A' beziehen. Diese Maßnahme gewährleistet, daß der Bedienrechner 24 zwischen Objekten der ursprünglichen Klasse A und der ursprünglichen Klasse A' unterscheiden kann.

Das Anwendungsprogramm 102 veranlaßt, daß mittels Datenbankprogramm 110 aus dem Speicher 42 die Daten der Objekte a2 und a3 gelesen werden, die als ursprüngliche Klasse die Klasse A bzw. A' haben. An das Schnittstellenprogramm 100 werden zwei nicht dargestellte Bestätigungsnachrichten BN3 und BN4 gesendet. Im Schnittstellenprogramm 100 wird aus der Bestätigungsnachricht BN3 eine neue Bestätigungsnachricht BN3' erzeugt, die das Klassenzeichen moC=A, das Objektkennzeichen moI=a2, das Ursprungskennzeichen oC=A und das Hilfskennzeichen allo ={} enthält. Aus der Bestätigungsnachricht BN4 wird im Schnittstellenprogramm 100 eine Bestätigungsnachricht BN4' erzeugt, welche das Klassenkennzeichen moC=A', das Objektkennzeichen moI=a3, das Ursprungskennzeichen oC=A', und das Hilfskennzeichen allo={A} enthält.

Der CCITT-Standard X.734 "Information Technology - Open Systems Interconnection - Systems Management: Event Report Management Function" aus dem Jahre 1993 erläutert die Ereignissteuerung im Führungsnetz 10, vgl. Figur 1. Es werden sogenannte Diskriminatoren verwendet, die Ereignisse innerhalb der Vermittlungsstelle 16 nur unter bestimmten Bedingungen an den Bedienrechner 24 weiterleiten. Nach der Weiterentwicklung der Klasse A zur Klasse A' genügt es, die Diskriminatoren, welche die Klasse A betreffen, in Diskriminatoren umzuwandeln, welche die Klasse A' betreffen. Werden nach der Weiterentwicklung neue Diskriminatoren erzeugt, so wird die Klasse A durch die Klasse A' ersetzt, wenn die Klasse A als Auswahlkriterium für das Weiterleiten der Nachrichten angegeben ist.

## Patentansprüche

1. Verfahren zum Betreiben eines Telekommunikationsnetzes (10, 12),
bei dem ein Netzelement (16) an einem Netzknoten eines Telekommunikationsnetzes (12) von einem Steuerrechner (36) gesteuert wird,
im Steuerrechner (36) neben dem Betriebssystem mehrere Anwendungsprogramme (102, 104) gespeichert sind, bei deren Ausführen Anwendungsobjekte (a2, a3) bearbeitet werden,
die Anwendungsobjekte (a2, a3) je nach Zugehörigkeit zu einer Klasse (A, A') Daten mit einer vorgegebenen Datenstruktur sowie vorzugsweise auch vorgegebene Verfahren zum Bearbeiten der Daten haben,
zwischen einem Bedienrechner (24) und dem Steuerrechner (36) eine Verbindung aufgebaut wird, über die der Steuerrechner (36) mittels mindestens einer Wartungsnachricht (WN1 bis WN3) gewartet wird,
die Wartungsnachricht (WN1 bis WN3) ein Klassenkennzeichen (moC) enthält, das die Wartungsnachricht (WN1 bis WN3) einer Klasse (A, A') zuordnet,
das Klassenkennzeichen (moC) der Wartungsnachricht (WN1 bis WN3) die im Bedienrechner bekannte Klasse (A) eines zu bearbeitenden Anwendungsobjektes (a2, a3) angibt,
beim Abarbeiten des Schnittstellenprogramms (100) anhand des Klassenkennzeichens (moC) ein Ersatzkennzeichen ermittelt wird, welches eine Ersatzklasse (A') angibt, der das zu bearbeitende Anwendungsobjekt (a2, a3) im Netzelement (16) angehört,
beim Abarbeiten des Schnittstellenprogramms (100) das Ersatzkennzeichen (A') in eine geänderte Wartungsnachricht (WN1' bis WN2') aufgenommen wird,
und bei dem beim Bearbeiten der geänderten Wartungsnachricht (WN1' bis WN2') durch ein Anwendungsprogramm (102) das zu bearbeitende Anwendungsobjekt (a2, a3) als Objekt der Ersatzklasse (A') bearbeitet wird.

2. Verfahren nach einem der vorhergehenden Ansprüche, **dadurch gekennzeichnet**, daß beim Ermitteln des Ersatzkennzeichens (A') eine im Speicher (122) des Steuerrechners (16) gespeicherte erste Tabelle (T) verwendet wird, in der dem Klassenkennzeichen (A) ein Ersatzkennzeichen (A') zugeordnet ist.

3. Verfahren nach Anspruch 1 oder 2, **dadurch gekennzeichnet**, daß das Anwendungsprogramm (102) nach dem Bearbeiten der geänderten Wartungsnachricht (WN1') eine Bestätigungsnachricht (BN1) erzeugt, in der die beim Erzeugen des zu bearbeitenden Anwendungsobjekts (a2, a3) angegebene Klasse (oC) als Klassenkennzeichen (moC) angegeben ist.

4. Verfahren nach Anspruch 3, **dadurch gekennzeichnet**, daß beim Abarbeiten des Schnittstellenprogramms (100) aus der Bestätigungsnachricht (BN1) eine geänderte Bestätigungsnachricht (BN1') erzeugt wird, die nur solche Daten enthält, die ein Anwendungsobjekt (a2) der Klasse (A) hat, auf die sich die Bestätigungsnachricht (BN1) bezieht,
und daß die geänderte Bestätigungsnachricht (BN1') an den Bedienrechner (24) gesendet wird.

5. Verfahren nach Anspruch 3 oder 4, **dadurch gekennzeichnet**, daß die beim Erzeugen des zu bearbeitenden Anwendungsobjektes (a2, a3) angegebene Klasse (A, A') als Ursprungsklasse (oC) in den Daten das zu bearbeitenden Anwendungsobjekts (a2, a3) gespeichert ist,
und daß beim Abarbeiten des Anwendungsprogramms (102) die Ursprungsklasse (oC) als Klassenkennzeichen (moC) verwendet wird.

6. Verfahren nach einem der Ansprüche 3 bis 5, **dadurch gekennzeichnet**, daß die Bestätigungsnachricht (BN1) ein Hilfskennzeichen (allo) enthält, in welchem mindestens eine Klasse (A) bezeichnet ist, die im Bedienrechner (24) und/oder in mindestens einem anderen Bedienrechner als die Klasse (A) bekannt ist, zu der das zu bearbeitende Anwendungsobjekt (a2, a3) gehört, vorzugsweise zumindest die im Bedienrechner (24) bekannte Klasse (A) des zu bearbeitenden Anwendungsobjekts (a2, a3).

7. Verfahren nach Anspruch 6, **dadurch gekennzeichnet**, daß die Bestätigungsnachricht (BN1) neben dem Klassenkennzeichen (moC) ein Ursprungskennzeichen (oC) enthält, in welchem die Ursprungsklasse (A, A') angegeben ist.

8. Verfahren nach Anspruch 6 oder 7, **dadurch gekennzeichnet**, daß mindestens eine im Bedienrechner (24) und/oder in mindestens einem anderen Bedienrechner für das Anwendungsobjekt bekannte Klasse (A) als Allomorphklasse (allo) in den Daten des Anwendungsobjektes (a2, a3) gespeichert ist,
und daß beim Abarbeiten des Anwendungsprogramms (102) die Allomorphklasse (allo) als Hilfskennzeichen (allo) verwendet wird.

9. Verfahren nach einem der Ansprüche 4 bis 8, **dadurch gekennzeichnet**, daß die bzw. eine beim Abarbeiten des Schnittstellenprogramms (100) für den Bedienrechner (24) erzeugte Bestätigungsnachricht (BN1') das Hilfskennzeichen (allo) und/oder das Klassenkennzeichen (moC) und/oder das Ursprungskennzeichen (oC) enthält.

10. Verfahren nach einem der vorhergehenden Ansprüche, **dadurch gekennzeichnet**, daß das Netzelement eine Vermittlungsstelle (16), ein Cross-Connector oder eine Konzentratoreinheit ist.

11. Verfahren nach einem der vorhergehenden Ansprüche, **dadurch gekennzeichnet**, daß das Telekommunikationsnetz (12) ein Festnetz, ein Mobilfunknetz oder ein Netz mit einem Festnetzanteil und einem Mobilfunknetzanteil ist.

12. Verfahren nach einem der vorhergehenden Ansprüche, **dadurch gekennzeichnet**, daß das Schnittstellenprogramm (100) weitere Schnittstellenfunktionen zwischen dem Bedienrechner (24) und den Anwendungsprogrammen (102, 104) ausführt,
vorzugsweise eine Ereignissteuerung zum Festlegen der Bearbeitungsreihenfolge der Wartungsnachrichten (WN1 bis WN3) und/oder eine Anpassung der vom Bedienrechner (24) kommenden Nachrichten (WN1 bis WN3) an ein Protokoll zur Nachrichtenübertragung innerhalb des Steuerrechners (16),
und/oder eine Anpassung der von den Anwendungsprogrammen (102, 104) kommenden Bestätigungsnachrichten (BN1, BN2) an ein vorgegebenes Protokoll zur Nachrichtenübertragung zwischen Bedienrechner (24) und Steuerrechner (16).

13. Verfahren nach einem der vorhergehenden Ansprüche, **dadurch gekennzeichnet**, daß ein erstes Anwendungsprogramm (102) zur Teilnehmerverwaltung,
und/oder ein zweites Anwendungsprogramm zum Verwalten von Verbindungsleitungen zu anderen Vermittlungseinrichtungen,
und/oder ein drittes Anwendungsprogramm zur Wartung der Vermittlungseinrichtungen,
und/oder ein viertes Anwendungsprogramm (104) zur Verkehrsmessung der geschalteten Verbindungen (18) verwendet wird.

14. Verfahren nach Anspruch 13, **dadurch gekennzeichnet**, daß die Anwendungsobjekte (a2, a3) des ersten Anwendungsprogramms (102) für jeweils einen Teilnehmer (Tln2, Tln3) die Teilnehmerdaten enthalten, vorzugsweise die Rufnummer und/oder die nutzbaren Telekommunikationsdienste.

15. Verfahren nach einem der vorhergehenden Ansprüche, **dadurch gekennzeichnet**, daß die Wartungsnachrichten (WN1 bis WN3) ein Namenskennzeichen (moI) für den Namen des Anwendungsobjektes (a2, a3) enthalten, auf welches sich die Wartungsnachricht (WN1 bis WN3) bezieht.

16. Netzelement (16) zum Betreiben eines Telekommunikationsnetzes (10, 12), **dadurch gekennzeichnet**, daß es einen Speicher zum Speichern von Befehlen hat, bei deren Abarbeiten das Verfahren nach einem der vorhergehenden Ansprüche durchgeführt wird.

17. Telekommunikationsnetz (10, 12), **gekennzeichnet durch**, ein Netzelement gemäß Anspruch 16.
